# EUROPÄISCHE PATENTSCHRIFT

(11) **EP 3 392 029 B1**
(45) Veröffentlichungstag und Bekanntmachung des Hinweises auf die Patenterteilung: **05.01.2022**
(21) Anmeldenummer: 17167540.8
(22) Anmeldetag: 21.04.2017
(51) Int. Cl.: B30B 5/06, B65H 23/182, B65H 19/18, B30B 15/30, B32B 38/18, B27D 3/04, B32B 37/10, B32B 41/00, B65H 16/00, B32B 37/20

(54) **ZUFÜHRVORRICHTUNG FÜR EINE DOPPELBANDPRESSE, DOPPELBANDPRESSENSYSTEM SOWIE BETRIEBSVERFAHREN**
FEEDING DEVICE FOR A DOUBLE BELT PRESS, DOUBLE BELT PRESS SYSTEM AND METHOD OF OPERATION
DISPOSITIF D'ALIMENTATION POUR UNE PRESSE À DOUBLE BANDE, SYSTÈME DE PRESSE À DOUBLE BANDE ET PROCÉDÉ DE FONCTIONNEMENT

(43) Veröffentlichungstag der Anmeldung: 24.10.2018
(73) Patentinhaber: Held Technologie GmbH, 78647 Trossingen-Schura (DE)
(72) Erfinder: Vargas, Edgardo, 78647 Trossingen (DE); Schnepf, Christian, 78549 Spaichingen (DE)
(74) Vertreter: Patent- und Rechtsanwälte Behrmann Wagner PartG mbB

(56) Entgegenhaltungen:
- EP-A1- 2 489 619
- EP-A2- 0 881 181
- EP-A2- 2 371 748
- DE-A1- 10 146 631
- DE-A1- 19 921 041
- DE-B3-102015 106 747
- GB-A- 2 170 485
- GB-A- 2 170 486
- US-A- 3 702 086
- US-A- 4 165 842

## Beschreibung

Die Erfindung betrifft eine Zuführvorrichtung gemäß Anspruch 1 zum Zuführen von mehreren, von jeweils einer Substratbandrolle abwickelbaren Substratbändern (oder anders ausgedrückt Substratbahnen) zu einer Doppelbandpresse zum Miteinander-Verpressen der Substratbänder, mit mehreren jeweils eine Abwickelwelle zur Aufnahme einer jeweiligen Substratbandrolle aufweisenden Abwickelstationen zum Abwickeln der Substratbänder von der jeweiligen Substratbandrolle, wobei zumindest eine der Abwickelstationen eine Kraftmesseinrichtung mit einer von einem zugehörigen der Substratbänder umschlingbaren Messwelle umfasst, der eine Hilfswelle für das zugehörige der Substratbänder zugeordnet ist. Umschlingbar bedeutet dabei, dass die Messwelle derart angeordnet ist, dass diese bei Bestückung der entsprechenden Abwickelstation mit einer Substratbandrolle von dem zugehörigen Substratband über einen Umfangswinkelvon weniger als 360°, insbesondere weniger als 180° beaufschlagbar ist. Ferner betrifft die Erfindung ein System gemäß Anspruch 12, umfassend eine solche Zuführvorrichtung sowie eine dieser nachgeordnete Doppelbandpresse. Darüber hinaus betrifft die Erfindung ein Verfahren gemäß Anspruch 13 zum Betreiben einer erfindungsgemäßen Zuführvorrichtung und/oder eines erfindungsgemäßen (Doppelbandpressen-)Systems.

Doppelbandpressen zum Miteinander-Verpressen von Substratbandrollen abgewickelten Substratbändern sind hinlänglich bekannt und beispielsweise in der DE 42 19 226 C2 beschrieben. Zur Herstellung von dekorativen Schichtstofflaminaten, Spanplatten, Faserplatten, Sperrholzplatten, Elektroniklaminaten, usw. muss das Pressgut (mehrere übereinander angeordnete Substratbänder) einem hohen Druck und einer hohen Temperatur ausgesetzt werden, insbesondere auch damit das Harz von bevorzugt harzhaltigen oder aus Harz bestehendes Substratband vollständig ausgehärtet wird und die (verpressten) Erzeugnisse die geforderte Qualität aufweisen. In der Regel arbeiten Doppelbandpressen kontinuierlich und umfassen zwei endlose Stahlbänder, die den Pressdruck und die benötigte Wärmemenge auf das Pressgut übertragen und dieses gleichzeitig durch die Doppelbandpresse hindurchziehen. Der Druck wird üblicherweise mechanisch durch sich auf den Pressbändern abwälzende Rollen oder hydraulisch mit fluiden Druckmitteln, insbesondere mit Öl gefüllten, nach außen abgedichteten Räumen übertragen.

Problematisch bei bekannten Doppelbandpressen ist die aufwendige manuelle Zuführung des Substratbandes zu der Doppelbandpresse, insbesondere nach einem Substratbandrollenwechsel. Dabei wird die eine Fahne (Endabschnitt) eines neuen Substratbands bisher manuell in Richtung Doppelbandpresse geführt, bis das neue Substratband von den anderen Substratbänder mitgenommen, insbesondere geklemmt und/oder von der Doppelbandpresse gezogen wird. Da in Doppelbandpressen üblicherweise eine Vielzahl von Substratbändern miteinander verpresst werden erfordert dies einen hohen Personaleinsatz und erfordert zudem eine erhöhte Aufmerksamkeit des Bedienpersonals. Ein besonders aufwendiger Zuführschritt besteht darin, ein neues Substratband um eine Messwelle umzulegen, mit welcher während des Betriebs eine von dem Substratband auf die Messwelle ausgeübte Kraft gemessen wird - diese ist proportional zu der auf das Substratband wirkende Zugkraft und dient zur Regelung eines Bremsmomentes, mit welchem die Abwickelwelle zur Aufrechterhaltung einer gewünschten Substratbandspannung beaufschlagt wird, nachdem das Substratband von der Doppelbandpresse gegriffen und gefördert wird. Dabei wird das Substratband bisher manuell um zwei der Messwelle zugeordnete, ortsfeste und rotierbar angeordnete Hilfswellen sowie um die Messwelle gelegt, um einen konstanten Umschlingungswinkel des Substratbandes um die Messwelle zu garantieren, der die Regelung des Bremsmomentes vereinfacht, da sich die von der Messwelle aufgenommene Kraft in Abhängigkeit eines sich verändernden Umschlingungswinkels ebenfalls verändern würde. Hier existieren zwar alternative Lösungen, bei der der Einfluss des Umschlingungswinkels berücksichtigt bzw. herausgerechnet wird, jedoch bedarf es hierzu entweder einer Sensierung des abnehmenden Substratbandrollendurchmessers und/oder einer Auswertung einer Umdrehungsgeschwindigkeit der Substratbandrolle sowie einer Fördergeschwindigkeit der Doppelbandpresse bzw. des Substratbandes durch die Doppelbandpresse. Insgesamt führt dies zu Ungenauigkeiten bei der Bremsmomentregelung und erhöht die Komplexität.

EP 0 881 181 A2 offenbart eine Zuführvorrichtung zum Zuführen von mehreren Substratbändern zu einer Doppelbandpresse zum Miteinander-Verpressen der Substratbänder, mit mehreren jeweils eine Abwickelwelle zur Aufnahme einer jeweiligen Substratbandrolle aufweisenden Abwickelstationen zum Abwickeln der Substratbänder von der jeweiligen Substratbandrolle wobei zumindest eine der Abwickelstation eine von einem zugehörigen der Substratbänder umschlingbaren Messwelle umfasst, der eine Hilfswelle für das zugehörige der Substratbänder zugeordnet ist.

Ausgehend von dem vorgenannten Stand der Technik liegt der Erfindung daher die Aufgabe zugrunde, eine verbesserte Zuführvorrichtung für Substratbandrollen zu einer Doppelbandpresse sowie ein eine solche Zuführvorrichtung sowie eine Doppelbandpresse umfassendes System anzugeben, die bzw. das eine vereinfachte, insbesondere automatisierte Zuführung eines neuen Substratbandes bzw. Substratbandfahne ermöglicht und gleichzeitig einen definierten, sich zwischen einem Einlaufwinkel und einem Auslaufwinkel erstreckenden Umschlingungswinkel des Substratbandes um die (Kraft-)Messwelle garantiert.

Unter dem Einlaufwinkel wird dabei der Winkel (die Winkelposition um die Messwelle) verstanden, in der das, bevorzugt tangential, auf die Messwelle auftreffende Substratband die Messwelle erstmals (eingangsseitig) kontaktiert. Der Ausgangswinkel ist der Winkel, bei dem die Substratbahn die Messwelle, insbesondere tangential, ausgangsseitig verlässt. Zwischen dem Eingangswinkel und dem Ausgangswinkel wird der Umschlingungswinkel aufgespannt, dessen Winkelhalbierende bevorzugt während des gesamten Abwickelprozesses an derselben Winkelposition verbleibt. Bevorzugt verläuft diese Winkelhalbierende parallel zu der radialen Messachse der Messwelle. Bevorzugt wird der Einlaufwinkel und der Auslaufwinkel in dieselbe Umfangsrichtung gemessen, ausgehend von einer radialen Nullwinkellinie, die bevorzugt gebildet ist von einer Radialen, die sich ausgehend von der Drehachse der Messwelle in vertikaler Richtung nach oben erstreckt.

Ferner besteht die Aufgabe darin ein Verfahren zum Betreiben einer solchen Zuführvorrichtung und/oder eines solchen Systems anzugeben.

Diese Aufgabe wird hinsichtlich der Zuführvorrichtung mit den Merkmalen des Anspruchs 1 gelöst, d.h. bei einer gattungsgemäßen Zuführvorrichtung dadurch, dass die Hilfswelle und die Messwelle nicht wie im Stand der Technik ortsfest relativ zueinander angeordnet sind, sondern relativ zueinander zwischen einer Durchführrelativposition zum, insbesondere automatischen, Durchführen des zugehörigen Substratbandes von der zugehörigen der Substratbandrollen durch einen Abstand zwischen der Messwelle und der Hilfswelle und einer einen vorgegebenen und/oder vorgebbaren Umschlingungswinkel des zugehörigen Substratbandes um die Messwelle definierenden Arbeitsrelativposition mithilfe von Relativverstellantriebsmitteln verstellbar sind.

Hinsichtlich des Systems wird die Aufgabe mit den Merkmalen des Anspruchs 12 und hinsichtlich des Verfahrens mit den Merkmalen des Anspruchs 13 gelöst, d.h. bei einem gattungsgemäßen Verfahren dadurch, dass auf der Abwickelwelle zumindest der ersten Abwickelstation eine Substratbandrolle angeordnet wird und das, bevorzugt vor und/oder während und/oder nach diesem Anordnen, die Hilfswelle und die Messwelle voneinander weg in die Durchführrelativposition verstellt werden, insbesondere durch Verstellen der Hilfswelle zu der bevorzugt ortsfest angeordneten Messwelle, und dass das Substratband von der Substratbandrolle durch den Abstand zwischen der Hilfswelle und der Messwelle, bevorzugt durch Antreiben der Abwickelwelle, hindurchgeführt und ein Umschlingungswinkel des Substratbandes um die Messwelle eingestellt wird, indem die Hilfswelle und die Messwelle relativ zueinander in ihre Arbeitsrelativposition verstellt werden.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale auch als verfahrensgemäß offenbart gelten und beanspruchbar sein.

Der Erfindung liegt der Gedanke zugrunde, die in einer Förderrichtung eines Substratbandes der Messwelle vorgeordnete Hilfswelle und die Messwelle nicht wie im Stand der Technik ortsfest relativ zueinander anzuordnen, sondern mittels eines Antriebs (Relativverstellantriebsmittel) relativ zueinander verstellbar, und zwar, insbesondere senkrecht zur jeweiligen Wellenlängserstreckung (radial) zwischen einer Durchführrelativposition und einer Arbeits- bzw. Einstellrelativposition. Dabei sind die Messwelle und die Hilfswelle in der Durchführrelativposition derart relativ zueinander bzw. soweit voneinander beabstandet angeordnet, dass durch den Abstand hindurch ein (neues) Substratband bzw. deren Endabschnitt (Substratbandfahne), insbesondere in vertikaler Richtung nach unten hindurchführbar ist, ganz besonders bevorzugt automatisiert, insbesondere durch Rotieren der zugehörigen Substratbandrolle mit ihrer Abwickelwelle mittels eines dieser zugeordneten (Abwickel-)Antriebs. In der Arbeitsrelativposition liegt die Hilfswelle in einem Bereich in der Förderrichtung des Substratbandes vor der Messwelle an dem Substratband an bzw. das Substratband stützt sich an der Hilfswelle ab, sodass über die Relativposition der Messwelle und der Hilfswelle in der Arbeitsrelativposition ein Einlaufwinkel des Substratbandes auf die Messwelle und damit ein Umschlingungswinkel des Substratbandes um die Messwelle definiert bzw. vorgegeben wird und somit unabhängig vom Substratbandrollendurchmesser die gleiche Einlaufsituation sichergestellt ist. Dieser Einlaufwinkel und damit der Umschlingungswinkel ist bevorzugt während des Abwickelvorgangs, bei welchem das zugehörige Substratband mit den anderen Substratbändern im Rahmen einer nachgeordneten Doppelbandpresse verpresst wird konstant, um auf eine Sensierung bzw. Berechnung des Einlaufwinkels und/oder einen von dem Einlaufwinkel definierten Umschlingungswinkel verzichtet zu können. Dabei ermöglicht die erfindungsgemäße Zuführvorrichtung eine erste Ausführungsform, bei der ein Einlaufwinkel fest vorgegeben ist. Eine alternative Ausführungsform sieht vor, dass der Einlaufwinkel, beispielsweise durch eine Benutzereingabe, insbesondere im Rahmen einer Grundparametisierung oder automatisiert in Abhängigkeit mindestens eines Parameters ausgewählt bzw. vorgegeben werden kann. Insbesondere kann bei dieser alternativen Ausführungsform zwischen unterschiedlichen Einlaufwinkeln ausgewählt oder ein beliebiger Einlaufwinkel vorgegeben werden. Die erfindungsgemäße Zuführvorrichtung ermöglicht es komfortabel, entweder manuell oder bevorzugt automatisch, beispielsweise durch Rotieren der Abwickelwelle mittels eines Abwickelantriebs das zugehörige Substratband, insbesondere dessen Substratbandfahne von oben in der Durchführrelativposition von Hilfswelle und Messwelle hindurchzuführen - ein manuelles Umlegen um die Hilfswelle ist nicht notwendig. Die Beaufschlagung des Substratbandes mit der Hilfswelle kann erfindungsgemäß automatisch über die Relativverstellantriebsmittel erfolgen, indem die Hilfswelle aus der Durchführrelativposition in eine den Einstellwinkel definierende Arbeitsrelativposition verstellt wird und/oder indem die Messwelle relativ zu der Hilfswelle zur Einstellung der Arbeitsrelativposition verstellt wird. Besonders bevorzugt ist eine Ausführungsform, bei der die Messwelle ortsfest angeordnet ist und die Hilfswelle relativ zu dieser, insbesondere translatorisch, ganz besonders bevorzugt senkrecht zur jeweiligen Wellenlängserstreckung, noch weiter bevorzugt horizontal über die Relativverstellantriebsmittel verstellbar ist. Um nicht nur den Einlaufwinkel während des Abwickelprozesses konstant zu halten, sondern auch den Auslaufwinkel des Substratbandes von der Messwelle, welcher zusammen mit dem Einlaufwinkel den Umschlingungswinkel definiert, ist in Weiterbildung der Erfindung eine der Messwelle in der Förderrichtung des Substratbandes nachgeordnete bzw. ausgangsseitige Umlenkwelle vorgesehen. Bevorzugt wird das Substratband nach einem automatischen Fördern auf die Fördermittel in der Förderrichtung von diesen mitgenommen, insbesondere translatorisch und dabei gegen die vorerwähnte Umlenkwelle verstellt. Hierbei wird ein besonders hoher Automatisierungsgrad erreicht.

Bevorzugt bleibt ein Winkel (Umfangsposition) der Winkelhalbierenden des Umschlingungswinkels (unabhängig von einer Substratbandrolle und deren sich ändernden Durchmesser) in dem den Einlaufwinkel und den Auslaufwinkel definierenden globalen Koordinatensystem immer gleich, wobei die radiale Winkelhalbierende bevorzugt parallel zu der radialen Messachse der Messwelle ausgerichtet ist.

Die erfindungsgemäße Zuführvorrichtung umfasst mehrere Abwickelstationen zum jeweiligen Abwickeln eines Substratbandes von einer auf einer Abwickelwelle angeordneten Substratbandrolle. Bevorzugt sind nicht nur bei einer einzigen der Abwickelstationen sondern bei mehreren der Abwickelstationen, ganz besonders bevorzugt bei der Mehrzahl der Abwickelstationen, noch weiter bevorzugt bei sämtlichen Abwickelstationen die Hilfswelle und die Messwelle in der zuvor beschriebenen Art relativ zueinander verstellbar, um ein vereinfachtes, insbesondere automatisches Durchführen des jeweiligen Substratbandes durch den Abstand zwischen der jeweiligen Messwelle und der jeweiligen Hilfswelle in deren Durchführrelativposition zu ermöglichen und um in der Arbeitsrelativposition den gewünschten Einlaufwinkel des Substratbandes auf die zugehörige Messwelle sicherzustellen. Ganz besonders bevorzugt ist dann der jeweiligen Messwelle in der Förderrichtung des jeweiligen Substratbandes eine Umlenkwelle zur Definition eines festen ausgangsseitigen Auslaufwinkels zugeordnet. In dieser Form sind auch die weiteren Ausführungen zu verstehen. Diese können gemäß einer Minimalanforderung an nur einer der Abwickelstationen realisiert sein - bevorzugt ist jedoch eine Realisierung bei mehreren, insbesondere der Mehrzahl, noch weiter bevorzugt bei sämtlichen Abwickelstationen.

In Weiterbildung der Erfindung ist mit Vorteil vorgesehen, dass die Hilfswelle entlang einer Vertikalen in einem Bereich oberhalb der Messwelle und unterhalb der Abwickelwelle angeordnet ist. Bevorzugt ist zwischen Hilfswelle und Messwelle in Förderrichtung des Substrates vor der Messwelle keine weitere Welle in Kontakt zu dem Substratband und/oder lenkt diese um, sodass die Hilfswelle die einzige den Einlaufwinkel zusammen mit der Messwelle definierende Welle ist.

Grundsätzlich sind die Substratbandrollen nicht Bestandteil der Zuführvorrichtung - vielmehr handelt es sich um Verbrauchsmaterial. Zur Definition von einer im Folgenden erläuterten bevorzugten Eigenschaft bzw. Anordnung von Hilfswelle und Messwelle kann eine Substratbandrolle jedoch als Bestandteil der Zuführvorrichtung betrachtet werden. In diesem Fall ist es bevorzugt, wenn die Hilfswelle und die Messwelle in der Durchführrelativposition derart relativ zueinander angeordnet sind, dass das Substratband dieser Substratbandrolle, bevorzugt unabhängig von einer Abwickelrotationsrichtung der Abwickelwelle geradlinig entlang einer Vertikalen durch den Abstand zwischen der Hilfswelle und der Messwelle, bevorzugt automatisiert, ganz besonders bevorzugt bis auf später noch zu erläuternde fakultative gemeinsame Fördermittel hindurchführbar ist. Anders ausgedrückt sind Hilfswelle und Messwelle in der Durchführrelativposition bevorzugt soweit voneinander beabstandet, dass unabhängig davon, ob die Substratbandfahne in oder entgegen dem Uhrzeigersinn abgewickelt wird geradlinig nach unten, insbesondere vertikal durch den Abstand zwischen Messwelle und Hilfswelle hindurchgeführt, insbesondere gefördert werden kann. Der Abstand zwischen den Wellen in der Durchführrelativposition entspricht also mindestens dem Substratbandrollendurchmesser und ist ganz besonders bevorzugt größer als dieser bemessen.

Wie bereits angedeutet ist es besonders bevorzugt, wenn der Abwickelwelle Abwickelantriebsmittel zum rotierenden Antreiben der Abwickelwelle zugeordnet sind. Dabei handelt es sich bevorzugt um einen Elektromotor, sodass ein automatisiertes Durchführen eines neuen Substratbandes bzw. Substratbandfahne durch den Abstand von Hilfswelle und Messwelle in der Durchführrelativposition ermöglicht wird. Ganz besonders bevorzugt ist eine Ausführungsform, bei der die Abwickelantriebsmittel gleichzeitig die Bremsmittel bilden, indem sie als Motorbremse wirken bzw. angesteuert werden. Die Bremsfunktion ist zur Aufrechterhaltung einer definierten Substratbandspannung hilfsreich, wenn das Substratband in den Wirkbereich der Doppelbandpresse gelangt.

In Weiterbildung der Erfindung sind dann auch die Abwickelantriebsmittel über diesen zugeordnete Steuermittel derart ansteuerbar, dass diese die Abwickelwelle zum Abwickeln eines zugehörigen Substratbandes von einer auf der Abwickelwelle aufgenommenen Substratbandrolle antreiben, um das zugehörige Substratband automatisiert durch den Abstand zwischen der Messwelle und der Hilfswelle in der Durchführrelativposition zu fördern. Wie ebenfalls bereits angedeutet ist es bevorzugt, wenn die mindestens eine Abwickelstation, bevorzugt von den Abwickelantriebsmitteln in Form einer Motorbremse ausgebildete Bremsmittel zum Beaufschlagen der zugehörigen Substratbandrollen, insbesondere der Abwickelwelle mit einem Bremsmoment aufweist, wobei bevorzugt die Bremsmittel zur Einstellung (Regelung) des Bremsmomentes in Abhängigkeit der auf das Substratband wirkenden Zugkraft über Steuermittel in Abhängigkeit eines Sensorsignals der Kraftmessmittel ansteuerbar sind. Anders ausgedrückt wird das Bremsmoment in Abhängigkeit der eingestellten (Soll-) und gemessenen (Ist-)Zugkraft eingestellt, wobei die über die Messwelle senkrecht zur Messwellenlängserstreckung gemessene Kraft proportional zu dieser Zugkraft und damit zur substratbandbreitenabhängigen Zugspannung ist und daher als Eingangsgröße für die Regelung verwendet werden kann.

In Weiterbildung der Erfindung ist zur weiteren Erhöhung des Automatisierungsgrades vorgesehen, zumindest einer Gruppe, von bevorzugt in der Förderrichtung der Substratbänder hin zur Doppelbandpresse nebeneinander angeordneten Abwickelstationen, bevorzugt sämtlichen Abwickelstationen gemeinsame Fördermittel zuzuordnen, mit denen die von den Abwickelwellen, bevorzugt durch Antreiben der Abwickelwellen mittels eines jeweiligen Abwickelwellenantriebs, oder eines an dem aktiven Antriebs automatisiert abgewickelten Substratbänder, bevorzugt translatorisch, ganz besonders bevorzugt horizontal in der Förderrichtung hin zu der Doppelbandpresse, bevorzugt bis in die Doppelbandpresse hinein förderbar sind. Durch das Vorsehen derartiger Fördermittel zum Fördern der Substratbänder kann auf ein bisher notwendiges manuelles Führen der Substratbänder in Richtung der Doppelbandpresse verzichtet werden. Dabei ist es besonders bevorzugt, wenn die Fördermittel in einem Bereich entlang einer Vertikalen unterhalb der Gruppe von Abwickelstationen, bevorzugt unterhalb sämtlicher Abwickelstationen angeordnet sind, um die Substratbänder von oben aufnehmen und dann in Richtung Doppelbandpresse, sprich in der Förderrichtung fördern zu können. Dabei ist es besonders zweckmäßig, wenn sich die Substratbänder während dieses Förderns auf den Fördermittel abstützen, indem sie auf diesen während des Transportes in Richtung Doppelbandpresse aufliegen.

Grundsätzlich ist es möglich, dass die Fördermittel sich unmittelbar bis zur Doppelbandpresse oder gar ein Stück weit in einen Aufnahmebereich der Doppelbandpresse hinein erstrecken, um auf einen manuellen Eingriff zum Einlegen bzw. Einführen der Substratbänder bzw. eines neuen Substratbandes in die Doppelbandpresse verzichten zu können. Auch ist eine Ausführungsform realisierbar, bei der ein möglicher Abstand in der Förderrichtung zwischen den Fördermitteln und einem Einlaufbereich der Doppelbandpresse überbrückt ist von Führungsmitteln, beispielsweise einem Einlauftisch oder einer Rollenanordnung, zum, bevorzugt, stützenden Führen der Substratbahnen von den Fördermitteln bis in die Doppelbandpresse hinein. Dabei werden neue Substratbänder über diese Führungsmittel mit Hilfe der Fördermittel geschoben und/oder über bereits in der Doppelbandpresse geklemmte Substratbänder gezogen.

Ingesamt erleichtern die erfindungsgemäßen Fördermittel die Zuführung von neu aufgelegten Substratbändern zur Doppelbandpresse erheblich - eine ganz besondere Erleichterung ist insbesondere für das in der Förderrichtung am weitesten von der Doppelbandpresse entfernten (ersten) Substratband gegeben, da sich dieses bisher nach unten nicht auf möglicherweise bereits eingeführten weiteren, weiter in der Förderrichtung vorne angeordneten Substratbändern abstützen kann, sondern manuell in der Förderrichtung nach vorne bis zur Doppelbandpresse geführt werden musste. Insbesondere dann, wenn sich die Fördermittel auch in einem Bereich unterhalb dieser in der Förderrichtung ersten bestückten Abwickelstation befinden, kann eine automatisierte bzw. erleichterte Zuführbarkeit auch dieses ersten Substratbandes über die Fördermittel gewährleistet werden.

Im Hinblick auf die konkrete Ausgestaltung der Fördermittel gibt es unterschiedliche Möglichkeiten. Ganz besonders bevorzugt ist eine Ausführungsform der Fördermittel als Förderband, welches bevorzugt unterhalb der Abwickelstationen angeordnet ist und auf das die jeweiligen Substratbahnen, insbesondere automatisiert, beispielsweise wie erwähnt über Abwickelantriebsmittel zum Antreiben einer eine Substratbandrolle aufnehmenden Abwickelwelle der jeweiligen Abwickelstation und/oder durch Antreiben einer bevorzugt vorgesehenen, später noch zu erläuternden Klemmwelle und/oder einer mit dieser zusammenwirkenden Messwelle und/oder eines sonstigen Antriebs automatisiert zugeführt bzw. auf den Fördermitteln abgelegt werden bzw. ablegbar sind.

Dabei sind die Fördermittel bevorzugt derart ausgebildet und angeordnet, dass mit diesen auch ein in der Förderrichtung letztes Substratband von einer in Förderrichtung ersten Abwickelstation der Gruppe von Abwickelstationen, bevorzugt von sämtlichen Abwickelstationen, insbesondere automatisiert, aufnehmbar und in Richtung der Doppelbandpresse förderbar ist - dies kann dadurch erreicht werden, dass die gemeinsamen Fördermittel in einem Bereich unterhalb der in der Förderrichtung ersten Substratbandrolle bzw. der in der Förderrichtung ersten und/oder der in der Förderrichtung ersten in Betrieb befindlichen Abwickelstation angeordnet sind - ohne die Fördermittel müsste das erste und somit unterste Substratband manuell bis in Richtung der Doppelbandpresse geführt bzw. transportiert werden.

Ganz besonders bevorzugt ist eine Ausführungsform der Zuführvorrichtung, bei der der Messwelle eine Klemmwelle zugeordnet ist, wobei Klemmwelle und Messwelle über Verstellantriebsmittel relativ zueinander, insbesondere senkrecht zu deren Längserstreckung aufeinander zu und voneinander weg verstellbar sind und zwar zwischen einer weiter voneinander beabstandeten Abstandsrelativposition, in der das zugehörige Substratband, insbesondere entlang einer Vertikalen, ganz besonders bevorzugt automatisiert durch einen Abstand zwischen der Klemmwelle und Messwelle hindurchführbar, insbesondere förderbar ist, und einer Klemmrelativposition, in der die Klemmwelle und Messwelle das zugehörige Substratband klemmen. Dabei ist es bevorzugt, wenn die Verstellantriebsmittel derart über Steuermittel ansteuerbar sind, dass zunächst eine Relativverstellung von Klemmwelle und Messwelle in die Klemmrelativposition zur Klemmung des Substratbandes erfolgt, bevor die Hilfswelle und/oder die Messwelle in die Einstellrelativposition angetrieben werden/wird, um ein Zurückziehen der zugehörigen Substratbandfahne zu vermeiden. Bevorzugt ist eine Ausführungsform, bei der die Klemmwelle über die Verstellantriebsmittel aktiv relativ zu der, bevorzugt ortsfesten, Messwelle verstellbar bzw. antreibbar ist.

Ganz besonders bevorzugt ist nun eine Ausführungsform der Zuführvorrichtung, bei der die Klemmwelle und/oder die Messwelle aktiv über Förderantriebsmittel rotierend antreibbar sind/ist, um den Abwickelvorgang zumindest zeitweise zu unterstützen und/oder im Wesentlichen alleine zu aktuieren, insbesondere bis das zugehörige Substratband selbsttätig von der Doppelbandpresse angetrieben bzw. gezogen wird. Bevorzugt ist ausschließlich die Klemmwelle motorisch angetrieben.

Ganz besonders bevorzugt ist dabei eine Ausführungsform, bei der durch rotierendes Antreiben der Klemmwelle und/oder der Messwelle das entsprechende Substratband auf die Fördermittel förderbar ist bzw. gefördert wird, um von diesen, bevorzugt translatorisch, in Richtung der Doppelbandpresse mitgenommen zu werden. Bevorzugt wird ein (neues) Substratband von den Fördermitteln gegen eine zuvor bereits erläuterte fakultative, der Messwelle nachgeordnete Umlenkwelle geführt bzw. transportiert, die mit der Messwelle einen festen Auslaufwinkel des Substratbandes von der Messwelle definiert.

Die Erfindung führt auch auf ein System, umfassend eine nach dem Konzept der Erfindung ausgebildete, zuvor erläuterte Zuführvorrichtung und eine dieser nachgeordneten Doppelbandpresse zum Miteinander-Verpressen der mehreren Substratbändern. Insgesamt ist es Vorteil, wenn zumindest eines der Substratbänder, bevorzugt mehrere der Substratbänder harzhaltig sind oder aus einem Material, insbesondere Harz bestehen, welches in der Doppelbandpresse durch Druck- und Temperatureinfluss schmilzt und/oder aushärtet. Bevorzugt ist die Doppelbandpresse dabei derart ausgebildet, dass mit dieser die Substratbänder mit einem Druck aus einem Bereich zwischen 5bar und 80bar (oder höher) und/oder einer Temperatur aus einem Temperaturbereich zwischen 60°C und 400°C (oder höher) beaufschlagbar sind.

Die Erfindung führt auch auf ein Verfahren zum Betreiben einer erfindungsgemäßen Zuführvorrichtung und/oder eines erfindungsgemäßen Systems, welches zumindest in Teilen zuvor schon erläutert wurde. Erfindungsgemäß ist vorgesehen, dass auf der Abwickelwelle zumindest der ersten Abwickelstation (bevorzugt auf mehreren erfindungsgemäß ausgestalteten Abwickelstationen jeweils) eine Substratbandrolle angeordnet wird, und dass, insbesondere vor und/oder während und/oder nach dem Anordnen, die Hilfswelle und die Messwelle, insbesondere senkrecht zu deren Längserstreckung in die Durchführrelativposition verstellt werden, insbesondere durch (aktives) Verstellen der Hilfswelle zu der bevorzugt ortsfest angeordneten Messwelle, und dass das Substratband von der Substratbandrolle durch den Abstand zwischen der Hilfswelle und der Messwelle, bevorzugt durch Antreiben der zugehörigen Abwickelwelle, hindurchgeführt, insbesondere gefördert und ein Umschlingungswinkel des Substratbandes um die Messwelle eingestellt wird (insbesondere durch Einstellen des Einlaufwinkels), indem die Hilfswelle und die Messwelle relativ zueinander in die Arbeitsrelativposition verstellt werden.

Bevorzugt ist es, wenn vor dem Erreichen der Einstellrelativposition, insbesondere vor Beginn der Relativverstellbewegung zwischen Hilfswelle und Messwelle das zugehörige Substratband zwischen der Messwelle und einer Klemmwelle geklemmt wird und bevorzugt von der Messwelle und der Klemmwelle angetrieben wird. Für den Fall der Realisierung eines aktiven Antriebs für die Messwelle und/oder die Klemmwelle ist es bevorzugt dass die Abwickelantriebsmittel, beispielsweise geschwindigkeitsgesteuert mitlaufen bzw. die Abwickelwelle antreiben. Bevorzugt wird das Substratband mit gemeinsamen Fördermitteln in Richtung der Doppelbandpresse gefördert, insbesondere derart, dass das Substratband von den Fördermitteln gegen eine fakultative, ausgangsseitige Umlenkwelle zur Definition eines Auslaufwinkels des Substratbandes von der Messwelle verstellt wird.

Insgesamt ist es von Vorteil, wenn das Substratband von, insbesondere von den Abwickelantriebsmitteln zum Antreiben der Abwickelwelle gebildeten oder zusätzlich vorgesehenen, beispielsweise als Backenbremse ausgebildeten und/oder eine Bremsscheibe umfassenden Bremsmitteln mit einem Bremsmoment beaufschlagt wird, welches in Abhängigkeit der mittels der Messwelle gemessenen Kraft geregelt wird.

Vorteilhafte Ausgestaltungen der Erfindung ergeben sich aus der nachfolgenden Beschreibung eines bevorzugten Ausführungsbeispiels sowie anhand der Zeichnungen.

Diese zeigen in:
- Fig. 1:: ein eine erfindungsgemäße Zuführvorrichtung umfassendes System mit einer Doppelbandpresse, und
- Fig. 2: eine schematische Seitenansicht der Messwelle zur Definition der unterschiedlichen Winkel.

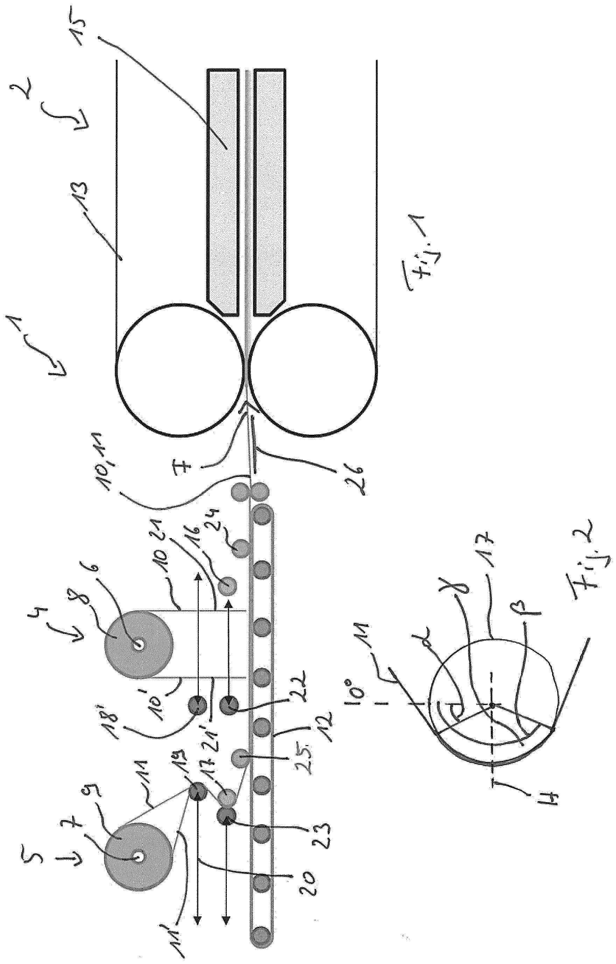

In Fig. 1 ist ein System 1, umfassend eine Doppelbandpresse 2 sowie eine dieser vorgeordnete Zuführvorrichtung 3 für Substratbänder gezeigt. Die Zuführvorrichtung 3 umfasst in dem gezeigten Ausführungsbeispiel aus Übersichtlichkeitsgründen lediglich zwei Abwickelstationen 4, 5, wobei in der Praxis mehr als zwei Abwickelstationen hintereinander vorgesehen sind.

Sämtliche Abwickelstationen umfassen eine Abwickelwelle 6, 7, die über nicht gezeigte, elektromotorische Abwickelantriebsmittel rotierbar sind, um von einer jeweiligen, auf der zugehörigen Abwickelwelle 6, 7 aufgenommenen Substratbandrolle 8, 9 ein Substratband 10, 11 abzuwickeln. Je nach Abwickelrichtung sind die Substratbänder (Substratbahnen) in Fig. 1 mit dem Bezugszeichen 10, 11 (Abwicklung im Uhrzeigersinn) bzw. 10', 11' (Abwicklung im Gegenuhrzeigersinn) gekennzeichnet.

In einem Bereich entlang einer Vertikalen V sind unterhalb der Abwickelstationen 4, 5 Fördermittel 12, hier beispielhaft in der Form eines Förderbandes vorgesehen, mit denen die an den Abwickelstationen 4, 5 von einer jeweils zugehörigen Substratbandrolle 8, 9 abgewickelten Substratbänder 10, 11 abschnittsweise übereinander bis kurz vor die Doppelbandpresse 2 förderbar sind. Bei Bedarf können die Fördermittel 12 noch näher an die Doppelbandpresse 2 geführt sein oder alternativ kann in einem Bereich zwischen den Fördermitteln 12 und der Doppelbandpresse 2 eine Leitanordnung (Fördermittel 26), insbesondere ein Leitblech und/oder ein Einlauftisch angeordnet werden, um die Substratbänder 10, 11 bis in die Substratbandpresse 2 hinein zu führen und zu stützen. Die (angetriebenen) Fördermittel 12 fördern die Substratbänder 10, 11 aktiv translatorisch, vorliegend in horizontaler Richtung auf die Doppelbandpresse 2 hinzu. Sobald die Substratbänder 10, 11 in den Wirkbereich von zwei endlosen, umlaufenden Stahlbändern 13, 14 der Doppelbandpresse 2 gelangen, werden diese von den Stahlbändern 13, 14 geklemmt und gezogen, sodass spätestens ab dann die Abwickelantriebsmittel als Bremsmittel zur Beaufschlagung des jeweils zugehörigen Substratbandes zur Einstellung einer gewünschten Zugkraft und damit Zugspannung beaufschlagbar sind. Zu erkennen sind innerhalb der Doppelbandpresse 2 in dem gezeigten Ausführungsbeispiel kombinierte Mittel 15 zur Druck- und Temperaturbeaufschlagung der Substratbänder 10, 11 (Pressgut) in an sich bekannter Weise.

Bei der nach dem Konzept der Erfindung ausgebildeten Zuführvorrichtung 3 sind die Abwickelstationen 4, 5 funktionell gleich aufgebaut und umfassen jeweils eine Messwelle 16, 17, von ansonsten nicht weiter dargestellten Kraftmesseinrichtungen zur Messung einer Kraft, mit welcher die jeweilige Messwelle 16, 17 von dem jeweils zugehörigen Substratband 10, 11 senkrecht zur Messwellenlängserstreckung beaufschlagt wird. Der Messwelle 16, 17 ist jeweils eine Hilfswelle 18, 19 zugeordnet, die über nicht gezeigte, beispielsweise elektromotorische oder hydraulische oder pneumatische Relativverstellantriebsmittel zwischen einer bei der in der Zeichnungsebene rechten Abwickelstation 4 dargestellten Durchführrelativposition und einer in der in der Zeichnungsebene linken Abwickelstation 5 gezeigten Arbeitsrelativposition, hier beispielsweise translatorisch entlang den Pfeilrichtungen 20 relativ zu der zugehörigen Messwelle 16, 17 angetrieben verstellbar ist. In dem vorliegenden Ausführungsbeispiel sind die Messwellen 16, 17 ortsfest angeordnet und die jeweilige Hilfswelle 18, 19 ist über die Relativverstellantriebsmittel verstellbar. Zusätzlich oder alternativ kann die jeweilige Messwelle 16, 17 über die Relativverstellantriebsmittel angetrieben ausgebildet sein.

In der in der Zeichnung rechten Abwickelstation 4 gezeigten Durchführrelativposition kann das Substratband 10 bzw.10', genauer deren Endabschnitt bzw. Fahne 21 bzw. 21' entlang der Vertikalen V von oben nach unten geradlinig durch den horizontalen Abstand zwischen der Messwelle 16 und der Hilfswelle 18 geführt werden, und zwar bevorzugt automatisiert und unabhängig von der Abwickelrichtung durch Antreiben der zugehörigen Substratbandrolle 8 über die Abwickelwelle 6 mit den zugehörigen Abwickelantriebsmitteln (nicht gezeigt).

Ferner ist aus Fig. 1 zu erkennen, dass in einem Bereich entlang der Vertikalen V unterhalb der Messwellen 16, 17 jeweils eine Klemmwelle 22, 23 angeordnet ist, die über jeweilige Verstellantriebsmittel (nicht gezeigt) zwischen einer an der in der Zeichnung rechten Abwickelstation 5 dargestellten Abstandsrelativposition und einer in der Zeichnung an der linken Abwickelstation 4 gezeigten Klemmposition verstellbar ist, wobei die Klemmwelle 22, 23 das zugehörige Substratband 10, 11 in der jeweiligen Klemmposition klemmt.

In der jeweiligen Förderrichtung eines Substratbandes 10, 11 nach der jeweiligen Messwelle 16, 17 ist in dem konkreten Ausführungsbeispiel der jeweiligen Messwelle 16, 17 jeweils eine Umlenkwelle 24, 25 zur Realisierung eines definierten Auslaufwinkels des Substratbandes 10, 11 von der jeweiligen Messwelle 16, 17 zu definieren bzw. festzulegen.

Bei einem Rollenwechsel oder einem Produktionsstart wird bevorzugt wie folgt vorgegangen: Zunächst wird eine Substratbandrolle 8, 9 an einer jeweiligen Abwickelstation 4, 5 auf eine zugehörige Abwickelwelle 6, 7 angeordnet. Hilfswelle 18 bzw. 19 und Messwelle 16, 17 befinden sich dann in einer in der erläuterten Zuführrelativposition bzw. werden in diese relativ zueinander verstellt. Ferner befindet sich die zugehörige Klemmwelle 22, 23 und zugehörige die Messwelle 16, 17 in der in der Zeichnung rechts gezeigten Abstandsrelativposition. Nun werden die Abwickelantriebsmittel über Steuermittel so angesteuert, dass ein Substratband im oder gegen den Uhrzeigersinn abgewickelt wird und dadurch entlang der Vertikalen V durch einen Abstand zwischen der jeweiligen Messwelle 16, 17 und der jeweiligen Hilfswelle 18, 19 hindurchgeführt, genauer gefördert wird, ebenso wie durch einen Abstand zwischen der Messwelle 16, 17 und der Klemmwelle 22, 23. Das Substratband 10, 10' bzw. 11, 11' wird dann also in Richtung Fördermittel 12 nach unten verstellt. Nach Passieren des Abstandes zwischen Messwelle 16, 17 und Klemmwelle 22, 23 wird die Klemmwelle 22, 23 über die Verstellantriebsmittel in eine zuvor erläuterte Klemmposition verstellt, in der das Substratband 10, 10'; 11, 11' zwischen Messwelle 16, 17 und Klemmwelle 22, 23 geklemmt wird. Daraufhin wird dann die Hilfswelle 18, 19 aus der Durchführrelativposition in die Arbeitsrelativposition verstellt (vgl. links in Fig. 1), sodass sich ein definierter Einlaufwinkel α einstellt. Ein analog bestimmter Auslaufwinkel β wird über die zugehörige Umlenkwelle 24 vorgegeben. Aus der Größe des Einlaufwinkels α (vgl. Fig. 2) und des Auslaufwinkels β (vgl. Fig. 2) ergibt sich der Umschlingungswinkel χ des jeweiligen Substratbandes (vgl. Fig. 2) und die zugehörige Messwelle, zu dem die von der jeweiligen Messwelle 16, 17 gemessene Kraft proportional ist. Die radiale Winkelhalbierende H des Umschlingungswinkels χ bleibt an einer vorgegebenen Umfangsposition und ist vorliegend parallel zu der radialen Messachse der Messwelle ausgerichtet. Bevorzugt ist die Klemmwelle 22, 23 über Antriebsmittel aktiv rotierbar und unterstützt somit eine Förderung des Substratbandes 10, 10'; 11, 11' auf das und/oder auf den Fördermitteln 12. Bevorzugt läuft die zugehörige Abwickelwelle 6 bzw. deren Antriebsmittel während dieses Förderns geschwindigkeitsgeregelt mit. Von den Fördermitteln 12 werden die Substratbänder 10, 10'; 11, 11' dann gegen die zugehörige Umlenkwelle 24, 25 gefördert, um den zuvor erläuterten Auslaufwinkel β festzulegen. Nachdem die aufeinanderliegenden Substratbänder 10, 10'; 11, 11' von der Doppelbandpresse 2 mitgenommen bzw. angetrieben werden werden die Abwickelantriebsmittel als Bremsmittel angesteuert, indem das von diesen aufgebrachte Bremsmoment geregelt wird in Abhängigkeit eines Sensorsignals der Kraftmesseinrichtung, also in Abhängigkeit der auf die Messwelle 16, 17 von dem Substratband 10, 10'; 11, 11' aufgebrachten Kraft.

In Fig. 2 ist zur allgemeinen Definition der in der vorliegenden Offenbarung behandelten Winkel die Messwelle 17 gemäß Fig. 1 mit der Ein- und Auslaufsituation des Substratbandes vergrößert dargestellt. In einem globalen Koordinatensystem wird ein 0°-Winkel definiert von einer sich ausgehend von einer Drehachse der Messwelle in vertikaler Richtung nach oben erstreckenden und mit 0° bezeichneten Radialen. In diesem globalen Koordinatensystem ist der Einlaufwinkel α der Winkel zwischen der vorgenannten Radialen und derjenigen Umfangsposition an der die ausgehend von der Hilfswelle 19 tangential (bezogen auf die Messwelle 17) der Messwelle 17 zugeleitete Substratbahn 11 die Messwelle einlaufseitig erstmals berührt. In die gleiche Umfangsrichtung (hier beispielhaft im Gegenuhrzeigersinn) ausgehend von der 0°-Radialen wird der Auslaufwinkel β bestimmt. Hierbei handelt es sich um den Winkel, an dem die Substratbahn 11 die Messwelle 17 auslaufseitig verlässt bzw. letztmals berührt. Zwischen dem Einlaufwinkel α und dem Auslaufwinkel β wird der Umschlingungswinkel y aufgespannt, dessen Winkelhalbierende H während des Abwickelprozesses bevorzugt an derselben Umfangsposition gehalten wird, die bevorzugt so gewählt ist, dass die Winkelhalbierende H parallel zu einer radialen Messachse der Messwelle verläuft.

### Bezugszeichen

- 1: System
- 2: Doppelbandpresse
- 3: Zuführvorrichtung
- 4: Abwickelstation
- 5: Abwickelstation
- 6: Abwickelwelle
- 7: Abwickelwelle
- 8: Substratbandrolle
- 9: Substratbandrolle
- 10, 10': Substratband
- 11, 11': Substratband
- 12: Fördermittel
- 13: Stahlband
- 14: Stahlband
- 15: Heiz- und Druckbeaufschlagungsmittel
- 16: Messwelle
- 17: Messwelle
- 18: Hilfswelle
- 19: Hilfswelle
- 20: Pfeilrichtungen
- 21: Fahne
- 22: Klemmwelle
- 23: Klemmwelle
- 24: Umlenkwelle
- 25: Umlenkwelle
- 26: Fördermittel

- V: Vertikale
- F: Förderrichtung
- H: Winkelhalbierende des Umschlingungswinkels χ

- α: Einlaufwinkel
- β: Auslaufwinkel
- χ: Umschlingungswinkel

## Patentansprüche

1. Zuführvorrichtung (3) zum Zuführen von mehreren Substratbändern (10, 10'; 11, 11') zu einer Doppelbandpresse (2) zum Miteinander-Verpressen der Substratbänder (10, 10'; 11, 11'), mit mehreren jeweils eine Abwickelwelle (6, 7) zur Aufnahme einer jeweiligen Substratbandrolle (8, 9) aufweisenden Abwickelstationen (4, 5) zum Abwickeln der Substratbänder (10, 10'; 11, 11') von der jeweiligen Substratbandrolle (8, 9) wobei zumindest eine der Abwickelstation (4) eine Kraftmesseinrichtung mit einer von einem zugehörigen der Substratbänder (10, 10'; 11, 11') umschlingbaren Messwelle (16, 17) umfasst, der eine Hilfswelle (18, 19) für das zugehörige der Substratbänder (10, 10'; 11, 11') zugeordnet ist,
**dadurch gekennzeichnet,**
**dass** die Hilfswelle (18, 19) und die Messwelle (16, 17) der zumindest einen Abwickelstation (4) relativ zueinander zwischen einer Durchführrelativposition zum, insbesondere automatischen, Durchführen des zugehörigen Substratbandes (10, 10'; 11, 11') von der zugehörigen der Substratbandrollen (8, 9) durch einen Abstand zwischen der Messwelle (16, 17) und der Hilfswelle (18, 19) und einer einen vorgegebenen und/oder vorgebbaren Umschlingungswinkel (χ) des zugehörigen Substratbandes (10, 10'; 11, 11') um die Messwelle (16, 17) definierenden Arbeitsrelativposition mit Hilfe von Relativverstellantriebsmitteln verstellbar sind.

2. Zuführvorrichtung nach Anspruch 1,
**dadurch gekennzeichnet,**
**dass** die Hilfswelle (18, 19) entlang einer Vertikalen (V) in einem Bereich oberhalb der Messwelle (16, 17) und unterhalb der Abwickelwelle (6, 7) angeordnet ist.

3. Zuführvorrichtung nach einem der Ansprüche 1 oder 2,
**dadurch gekennzeichnet,**
**dass** die Messwelle (16, 17) ortsfest angeordnet ist und die Hilfswelle (18, 19) mittels der Relativverstellantriebsmittel relativ zu der Messwelle (16, 17) abstandsvariabel zwischen der Durchführrelativposition und der Arbeitsrelativverstellposition verstellbar ist.

4. Zuführvorrichtung nach einem der vorhergehenden Ansprüche, **dadurch gekennzeichnet,**
**dass** auf der Abwickelwelle (6, 7) der zumindest einen Abwickelstation (4, 5) eine Substratbandrolle (8, 9) angeordnet ist, und dass die Hilfswelle (18, 19) und die Messwelle (16, 17) in der Durchführrelativposition derart relativ zueinander angeordnet sind, dass das Substratband der Substratbandrolle (8, 9), bevorzugt unabhängig von einer Abwickelrotationsrichtung der Abwickelwelle (8, 9) geradlinig entlang einer Vertikalen (V) durch den Abstand zwischen der Hilfswelle (18, 19) und der Messwelle (16, 17) hindurchführbar ist.

5. Zuführvorrichtung nach einem der vorhergehenden Ansprüche, **dadurch gekennzeichnet,**
**dass** der Abwickelwelle (6, 7) Abwickelantriebsmittel zum rotierenden Antreiben der Abwickelwelle (6, 7) zugeordnet sind.

6. Zuführvorrichtung nach Anspruch 5,
**dadurch gekennzeichnet,**
**dass** den Abwickelantriebsmitteln Steuermittel zugeordnet sind, die der Abwickelantriebsmittel derart ansteuernd ausgebildet sind, dass diese die Abwickelwelle (6, 7) zum Abwickeln eines zugehörigen des Substratbandes (10, 10'; 11, 11') von einer auf der Abwickelwelle (6, 7) aufgenommenen Substratbandrolle (8, 9) antreiben, um des zugehörigen Substratbandes (10, 10'; 11, 11') automatisiert durch den Abstand zwischen der Messwelle (16, 17) und der Hilfswelle (18, 19) zu fördern.

7. Zuführvorrichtung nach einem der vorhergehenden Ansprüche, **dadurch gekennzeichnet,**
**dass** die mindestens eine Abwickelstation (4), bevorzugt von den Abwickelantriebsmitteln gebildete, Bremsmittel zum Beaufschlagen der zugehörigen der Substratbandrollen (8, 9), insbesondere der Abwickelwelle (6, 7), mit einem Bremsmoment aufweist, wobei bevorzugt die Bremsmittel zur Einstellung des Bremsmomentes in Abhängigkeit der auf das Substratband wirkenden Zugkraft über Steuermittel in Abhängigkeit eines Sensorsignals der Kraftmessmittel ansteuerbar sind.

8. Zuführvorrichtung nach einem der vorhergehenden Ansprüche, **dadurch gekennzeichnet,**
**dass** ausgangsseitig der Messwelle (16, 17) eine von dem zugehörigen der Substratbändern (10, 10'; 11, 11') umschlingbare Umlenkwelle (24, 25) zu Definition eines vorgegebenen und/oder vorgebbaren Auslaufwinkels (β) der zugehörigen der Substratbänder (10, 10'; 11, 11') von der Messwelle (16, 17) angeordnet ist.

9. Zuführvorrichtung nach einem der vorhergehenden Ansprüche, **dadurch gekennzeichnet,**
**dass** den Abwickelstationen (4, 5) gemeinsame Fördermittel (12), insbesondere ein Förderband und/oder eine Mehrzahl von rotierend angetriebenen nebeneinander angeordneten Förderollen, zum, bevorzugt horizontalen, Fördern der Substratbänder (10, 10'; 11, 11') in Richtung der Doppelbandpresse (2), bevorzugt bis in die Doppelbandpresse (2) hinein, nachgeordnet sind.

10. Zuführvorrichtung nach einem der vorhergehenden Ansprüche, **dadurch gekennzeichnet,**
**dass** der Messwelle (16, 17) eine Klemmwelle (22, 23) zugeordnet ist und dass Klemmwelle (22, 23) und Messwelle (16, 17) über Verstellantriebsmittel relativ zueinander aufeinander zu und voneinander weg verstellbar sind zwischen einer Abstandsrelativposition in der die zugehörige der Substratbänder (10, 10'; 11, 11'), insbesondere entlang einer Vertikalen (V), durch einen Abstand zwischen der Klemmwelle (22, 23) und der Messwelle (16, 17), bevorzugt automatisiert, hindurchführbar, insbesondere förderbar ist, und einer Klemmrelativposition, in der zwischen Klemmwelle (22, 23) und Messwelle (16, 17) das zugehörige der Substratbänder (10, 10'; 11, 11') klemmbar ist.

11. Zuführvorrichtung nach Anspruch 10,
**dadurch gekennzeichnet,**
**dass** die Klemmwelle (22, 23) und/oder die Messwelle (16, 17) aktiv über Förderantriebsmittel zum Abwickeln des zugehörigen der Substratbänder (10, 10'; 11, 11') rotierend antreibbar sind/ist.

12. System (1) umfassend eine Zuführvorrichtung (3) nach einem der vorhergehenden Ansprüche sowie eine dieser nachgeordnete Doppelbandpresse (2) zum Miteinander-Verpressen der mehreren Substratbänder (10, 10'; 11, 11').

13. Verfahren zum Betreiben einer Zuführvorrichtung (3) nach einem der Ansprüche 1 bis 11 und/oder eines Systems (1) gemäß Anspruch 12, **dadurch gekennzeichnet,**
**dass** auf der Abwickelwelle (6, 7) einer zumindest ersten Abwickelstation (4) eine Substratbandrolle (8, 9) angeordnet wird und dass die Hilfswelle (18, 19) und die Messwelle (16, 17) in die Durchführrelativposition verstellt werden, insbesondere durch Verstellen der Hilfswelle (18, 19) zu der bevorzugt ortsfest angeordneten Messwelle (16, 17), und dass das zugehörige Substratband (10, 10'; 11, 11') von der Substratbandrolle (8, 9) durch den Abstand zwischen der Hilfswelle (18, 19) und der Messwelle (16, 17), bevorzugt durch Antreiben der Abwickelwelle (6, 7), hindurchgeführt und ein Umschlingungswinkel (χ) des Substratbandes (10, 10'; 11, 11') um die Messwelle (16, 17) eingestellt wird, indem die Hilfswelle (18, 19) und die Messwelle (16, 17) relativ zueinander in die Arbeitsrelativposition verstellt werden.

14. Verfahren nach Anspruch 13,
**dadurch gekennzeichnet,**
**dass** das zugehörige Substratband (10, 10'; 11, 11') zwischen der Messwelle (16, 17) und der Klemmwelle (22, 23) geklemmt wird und bevorzugt von der Messwelle (16, 17) und der Klemmwelle (22, 23) angetrieben wird und/oder das zugehörige Substratband mit den Fördermitteln (12) in Richtung der Doppelbandpresse (2) gefördert wird, insbesondere derart, dass das Substratband (10, 10'; 11, 11') von den Fördermitteln (12) gegen die ausgangsseitige Umlenkwelle (24, 25) verstellt wird.

15. Verfahren nach einem der Ansprüche 13 oder 14,
**dadurch gekennzeichnet,**
**dass** das zugehörige Substratband (10, 10'; 11, 11') von, insbesondere von den Abwickelbetriebsmitteln zum Antreiben der Abwickelwelle (6, 7) gebildeten, Bremsmitteln mit einem Bremsmoment beaufschlagt wird, welches in Abhängigkeit der mittels der Messwelle (16, 17) gemessenen Kraft geregelt wird.

## Claims

1. A supply device (3) for supplying several substrate strips (10, 10'; 11, 11') to a double-belt press (2) for pressing the substrate strips (10, 10'; 11, 11') together, comprising several unwinding stations (4, 5) each comprising an unwinding shaft (6, 7) for receiving a respective substrate strip roll (8, 9) and serving to unwind the substrate strips (10, 10'; 11, 11') from the respective substrate strip roll (8, 9), at least one of the unwinding stations (4) comprising a force-measuring device with a measuring shaft (16, 17) around which a corresponding one of the substrate strips (10, 10'; 11, 11') can be wrapped, an auxiliary shaft (18, 19) for the corresponding one of the substrate strips (10, 10'; 11, 11') being assigned to the measuring shaft,
**characterized in that**
the auxiliary shaft (18, 19) and the measuring shaft (16, 17) of the at least one unwinding station (4) are moveable relative to each other between a relative guiding position for, in particular automatic, guiding of the corresponding substrate strip (10, 10'; 11, 11') from the corresponding roll of the substrate strip rolls (8, 9) through a gap between the measuring shaft (16, 17) and the auxiliary shaft (18, 19) and a relative operating position defining a pre-defined and/or pre-definable wrap angle (χ) of the corresponding substrate strip (10, 10'; 11, 11') around the measuring shaft (16, 17) by means of relative adjusting drive means.

2. The supply device according to claim 1,
**characterized in that**
the auxiliary shaft (18, 19) is disposed along a vertical (V) in an area above the measuring shaft (16, 17) and below the unwinding shaft (6, 7).

3. The supply device according to claim 1 or 2,
**characterized in that**
the measuring shaft (16, 17) is disposed so as to be fixed and the auxiliary shaft (18, 19) can be moved relative to the measuring shaft (16, 17) at a variable distance between the relative guiding position and the relative operating adjusting position by means of the relative adjusting drive means.

4. The supply device according to any one of the preceding claims, **characterized in that**
a substrate strip roll (8, 9) is disposed on the unwinding shaft (6, 7) of the at least one unwinding station (4, 5), and that the auxiliary shaft (18, 19) and the measuring shaft (16, 17) are disposed relative to one another in the relative guiding position in such a manner that the substrate strip from the substrate strip roll (8, 9) can be guided in a straight line along a vertical (V) through the gap between the auxiliary shaft (18, 19) and the measuring shaft (16, 17), preferably regardless of an unwinding rotation direction of the unwinding shaft (8, 9).

5. The supply device according to any one of the preceding claims, **characterized in that**
drive means for a rotating driving of the unwinding shaft (6, 7) are assigned to the unwinding shaft (6, 7).

6. The supply device according to claim 5,
**characterized in that**
the unwinding drive means are assigned control means which are configured to control the unwinding drive means in such a manner that they drive the unwinding shaft (6, 7) to unwind a corresponding one of the substrate strips (10, 10'; 11, 11') from a substrate strip roll (8, 9) accommodated on the unwinding shaft (6, 7) in order to transfer the corresponding substrate strip (10, 10'; 11, 11') in an automated manner through the gap between the measuring shaft (16, 17) and the auxiliary shaft (18, 19).

7. The supply device according to any one of the preceding claims, **characterized in that**
the at least one unwinding station (4) has brake means, preferably formed by the unwinding drive means, for applying a braking torque to the corresponding one of the substrate strip rolls (8, 9), in particular to the unwinding shaft (6, 7), the brake means preferably being controllable via drive means depending on a sensor signal of the force-measuring means for adjusting the braking torque depending on the traction acting on the substrate strip.

8. The supply device according to any one of the preceding claims, **characterized in that**
a deflection shaft (24, 25) around which the corresponding one of the substrate strips (10, 10'; 11, 11') can be wrapped is disposed at the outlet side of the measuring shaft (16, 17) for defining a pre-defined and/or pre-definable outlet angle (β) of the corresponding one of the substrate strips (10, 10'; 11, 11') from the measuring shaft (16, 17).

9. The supply device according to any one of the preceding claims, **characterized in that**
joint transfer means (12), in particular a conveyor belt and/or a plurality of conveying rollers which are driven in a rotating manner and disposed adjacent to one another, for transferring the substrate strips (10, 10';11, 11'), preferably horizontally, towards the double-belt press (2), preferably into the double-belt press (2), are disposed downstream of the unwinding stations (4, 5).

10. The supply device according to any one of the preceding claims, **characterized in that**
a clamp shaft (22, 23) is assigned to the measuring shaft (16, 17) and that the clamp shaft (22, 23) and the measuring shaft (16, 17) can be moved relative to one another towards one another and away from one another via adjusting drive means between a relative spaced position in which the corresponding one of the substrate strips (10, 10'; 11, 11') can be guided, in particular transferred, through a gap between the clamp shaft (22, 23) and the measuring shaft (16, 17), in particular along a vertical (V) and preferably in an automated manner, and a relative clamping position in which the corresponding one of the substrate strips (10, 10'; 11, 11') can be clamped between the clamp shaft (22, 23) and the measuring shaft (16, 17).

11. The supply device according to claim 10,
**characterized in that**
the clamp shaft (22, 23) and/or the measuring shaft (16, 17) can be actively driven in a rotating manner via transfer drive means to unwind the corresponding one of the substrate strips (10, 10'; 11, 11').

12. A system (1) comprising a supply device (3) according to any one of the preceding claims and a double-belt press (2) disposed downstream of the supply device (3) for pressing the several substrate strips (10, 10'; 11, 11') together.

13. A method for operating a supply device (3) according to any one of claims 1 to 11 and/or a system (1) according to claim 12,
**characterized in that**
a substrate strip roll (8, 9) is disposed on the unwinding shaft (6, 7) of an at least first unwinding station (4), and that the auxiliary shaft (18, 19) and the measuring shaft (16, 17) are moved into the relative guiding position, in particular by moving the auxiliary shaft (18, 19) to the preferably fixed measuring shaft (16, 17), and that the corresponding substrate strip (10, 10'; 11, 11') from the substrate strip roll (8, 9) is guided through the gap between the auxiliary shaft (18, 19) and the measuring shaft (16, 17), preferably by driving the unwinding shaft (6, 7), and a wrap angle (χ) of the substrate strip (10, 10';11, 11') around the measuring shaft (16, 17) is adjusted by moving the auxiliary shaft (18, 19) and the measuring shaft (16, 17) relative to one another into the relative operating position.

14. The method according to claim 13,
**characterized in that**
the corresponding substrate strip (10, 10'; 11, 11') is clamped between the measuring shaft (16, 17) and the clamp shaft (22, 23) and is preferably driven by the measuring shaft (16, 17) and the clamp shaft (22, 23) and/or the corresponding substrate strip is transferred towards the double-belt press (2) by means of the transfer means (12), in particular in such a manner that the substrate strip (10, 10'; 11, 11') is moved against the deflection shaft (24, 25) at the outlet side by the transfer means (12).

15. The method according to claim 13 or 14,
**characterized in that**
a braking torque which is controlled depending on the force measured by means of the measuring shaft (16, 17) is applied to the corresponding substrate strip (10, 10'; 11, 11') by brake means which are in particular formed by the unwinding drive means for driving the unwinding shaft (6, 7).

## Revendications

1. Dispositif d'alimentation (3) destiné à fournir plusieurs bandes de substrat (10, 10' ; 11, 11') à une presse (2) à double bande destinée à presser les bandes de substrat (10, 10' ; 11, 11') ensemble, le dispositif d'alimentation (3) comprenant plusieurs stations de déroulement (4, 5) dont chacune a un arbre de déroulement (6, 7) destiné à recevoir un rouleau (8, 9) de bande de substrat respectif, chaque station de déroulement étant destinées à dérouler les bandes de substrat (10, 10' ; 11, 11') du rouleau (8, 9) de bande de substrat respectif, au moins une des stations de déroulement (4) comprenant un dispositif de mesure de force ayant un arbre de mesure (16, 17) qui peut être enroulé par une bande de substrat correspondante des bandes de substrat (10, 10' ; 11, 11') et auquel est assigné un arbre auxiliaire (18, 19) pour la bande de substrat correspondante des bandes de substrat (10, 10' ; 11, 11'),
**caractérisé en ce que**
l'arbre auxiliaire (18, 19) et l'arbre de mesure (16, 17) de l'au moins une station de déroulement (4) sont déplaçables l'un par rapport à l'autre au moyen de moyens d'entraînement de déplacement relatif entre une position relative de passage servant à guider la bande de substrat (10, 10' ; 11, 11') correspondante du rouleau de bande de substrat correspondant des rouleaux (8, 9) de bande de substrat, notamment de manière automatique, à travers un espace entre l'arbre de mesure (16, 17) et l'arbre auxiliaire (18, 19) et une position relative de travail qui définit un angle d'enroulement (χ) déterminé et/ou déterminable de la bande de substrat (10, 10' ; 11, 11') correspondante autour de l'arbre de mesure (16, 17).

2. Dispositif d'alimentation selon la revendication 1,
**caractérisé en ce que**
l'arbre auxiliaire (18, 19) est disposé le long d'une verticale (V) dans une zone au-dessus de l'arbre de mesure (16, 17) et en dessous de l'arbre de déroulement (6, 7).

3. Dispositif d'alimentation selon la revendication 1 ou la revendication 2, **caractérisé en ce que**
l'arbre de mesure (16, 17) est disposé de manière fixe et l'arbre auxiliaire (18, 19) peut être déplacé au moyen des moyens d'entraînement de déplacement relatif par rapport à l'arbre de mesure (16, 17) à une distance variable entre la position relative de passage et la position relative de travail.

4. Dispositif d'alimentation selon l'une quelconque des revendications précédentes,
**caractérisé en ce**
**qu'**un rouleau (8, 9) de bande de substrat est disposé sur l'arbre de déroulement (6, 7) de l'au moins une station de déroulement (4, 5), et que l'arbre auxiliaire (18, 19) et l'arbre de mesure (16, 17) sont disposés l'un par rapport à l'autre dans la position relative de passage de manière que la bande de substrat du rouleau (8, 9) de bande de substrat peut être guidée en ligne droite, de préférence indépendamment d'une direction de rotation de déroulement de l'arbre de déroulement (8, 9), le long d'une verticale (V) à travers l'espace entre l'arbre auxiliaire (18, 19) et l'arbre de mesure (16, 17).

5. Dispositif d'alimentation selon l'une quelconque des revendications précédentes,
**caractérisé en ce que**
des moyens d'entraînement de déroulement destinés à l'entraînement rotatif de l'arbre de déroulement (6, 7) sont assignés à l'arbre de déroulement (6, 7).

6. Dispositif d'alimentation selon la revendication 5,
**caractérisé en ce que**
des moyens de commande sont assignés aux moyens d'entraînement de déroulement, lesdits moyens de commande commandant les moyens d'entraînement de déroulement de telle manière que les moyens d'entraînement de déroulement entraînent l'arbre de déroulement (6, 7) pour dérouler une bande de substrat correspondante des bandes de substrat (10, 10' ; 11, 11') d'un rouleau (8, 9) de bande de substrat reçu sur l'arbre de déroulement (6, 7) afin de transporter la bande de substrat (10, 10' ; 11, 11') correspondante de manière automatisée à travers l'espace entre l'arbre de mesure (16, 17) et l'arbre auxiliaire (18, 19).

7. Dispositif d'alimentation selon l'une quelconque des revendications précédentes,
**caractérisé en ce que**
l'au moins une station de déroulement (4) a des moyens de freinage, qui sont de préférence formés par les moyens d'entraînement de déroulement, pour appliquer un couple de freinage au rouleau de bande de substrat correspondant des rouleaux (8, 9) de bande de substrat, notamment à l'arbre de déroulement (6, 7), dans lequel, de préférence, les moyens de freinage peuvent être commandés par des moyens de commande en fonction d'un signal de capteur des moyens de mesure de force afin de régler un couple de freinage en fonction de la force de traction qui agit sur la bande de substrat.

8. Dispositif d'alimentation selon l'une quelconque des revendications précédentes,
**caractérisé en ce**
**qu'**un arbre de renvoi (24, 25) qui peut être enroulé par la bande de substrat correspondante des bandes de substrat (10, 10' ; 11, 11') est disposé du côté de sortie de l'arbre de mesure (16, 17) afin de définir un angle de sortie (β) déterminé et/ou déterminable de la bande de substrat correspondante des bandes de substrat (10, 10' ; 11, 11') de l'arbre de mesure (16, 17).

9. Dispositif d'alimentation selon l'une quelconque des revendications précédentes,
**caractérisé en ce que**
des moyens de transport (12) communs, notamment une bande de transport et/ou une pluralité de rouleaux de transport qui sont entrainés de manière rotative et qui sont disposés l'un à côté de l'autre, destinés au transport, de préférence horizontal, des bandes de substrat (10, 10' ; 11, 11') vers la presse (2) à double bande, de préférence dans la presse (2) à double bande, sont disposés en aval des stations de déroulement (4, 5).

10. Dispositif d'alimentation selon l'une quelconque des revendications précédentes,
**caractérisé en ce**
**qu'**un arbre de serrage (22, 23) est assigné à l'arbre de mesure (16, 17) et que l'arbre de serrage (22, 23) et l'arbre de mesure (16, 17) peuvent être déplacés l'un par rapport à l'autre pour se rapprocher l'un de l'autre et s'éloigner l'un de l'autre par des moyens d'entraînement de déplacement entre une position relative de distance dans laquelle la bande de substrat correspondante des bandes de substrat (10, 10' ; 11, 11') peut être guidée, notamment transportée, de préférence de manière automatisée, à travers un espace entre l'arbre de serrage (22, 23) et l'arbre de mesure (16, 17), notamment le long d'une verticale (V), et une position relative de serrage dans laquelle la bande de substrat correspondante des bandes de substrat (10, 10' ; 11, 11') peut être serrée entre l'arbre de serrage (22, 23) et l'arbre de mesure (16, 17).

11. Dispositif d'alimentation selon la revendication 10,
**caractérisé en ce que**
l'arbre de serrage (22, 23) et/ou l'arbre de mesure (16, 17) peut/peuvent être entrainé(s) de manière active et rotative par des moyens d'entraînement de transport afin de dérouler la bande de substrat correspondante des bandes de substrat (10, 10' ; 11, 11').

12. Système (1) comprenant un dispositif d'alimentation (3) selon l'une quelconque des revendications précédentes et une presse (2) à double bande disposée en aval du dispositif d'alimentation (3) et destinée à presser les plusieurs bandes de substrat (10, 10' ; 11, 11') ensemble.

13. Procédé de fonctionnement d'un dispositif d'alimentation (3) selon l'une quelconque des revendications 1 à 11 et/ou d'un système (1) selon la revendication 12,
**caractérisé en ce**
**qu'**un rouleau (8, 9) de bande de substrat est disposé sur l'arbre de déroulement (6, 7) d'une au moins première station de déroulement (4) et que l'arbre auxiliaire (18, 19) et l'arbre de mesure (16, 17) sont déplacés dans la position relative de passage, notamment par le déplacement de l'arbre auxiliaire (18, 19) vers l'arbre de mesure (16, 17), de préférence fixe, et que la bande de substrat (10, 10' ; 11, 11') correspondante est guidée du rouleau (8, 9) de bande de substrat à travers l'espace entre l'arbre auxiliaire (18, 19) et l'arbre de mesure (16, 17), de préférence par l'entraînement de l'arbre de déroulement (6, 7), et un angle d'enroulement (χ) de la bande de substrat (10, 10' ; 11, 11') autour de l'arbre de mesure (16, 17) est réglé en déplaçant l'arbre auxiliaire (18, 19) et l'arbre de mesure (16, 17) l'un par rapport à l'autre dans la position relative de travail.

14. Procédé selon la revendication 13,
**caractérisé en ce que**
la bande de substrat (10, 10' ; 11, 11') correspondante est serrée entre l'arbre de mesure (16, 17) et l'arbre de serrage (22, 23) et est, de préférence, entrainée par l'arbre de mesure (16, 17) et l'arbre de serrage (22, 23) et/ou la bande de substrat correspondante est transportée vers la presse (2) à double bande au moyen des moyens de transport (12), notamment de telle manière que la bande de substrat (10, 10' ; 11, 11') est déplacé contre l'arbre de renvoi (24, 25) du côté de sortie par les moyens de transport (12).

15. Procédé selon la revendication 13 ou la revendication 14,
**caractérisé en ce**
**qu'**un couple de freinage est appliqué à la bande de substrat (10, 10' ; 11, 11') correspondante par des moyens de freinage qui sont notamment formés par les moyens d'entraînement de déroulement pour entrainer l'arbre de déroulement (6, 7), dans lequel le couple de freinage est réglé en fonction de la force mesurée au moyen de l'arbre de mesure (16, 17).
